# EUROPÄISCHE PATENTSCHRIFT

(11) **EP 1 857 238 B1**
(45) Veröffentlichungstag und Bekanntmachung des Hinweises auf die Patenterteilung: **10.08.2011**
(21) Anmeldenummer: 07002035.9
(22) Anmeldetag: 31.01.2007
(51) Int. Cl.: B27B 33/08, B23C 5/08, B23D 63/02

(54) **Sägezahn mit Hartschicht**
Saw tooth with hard layer
Dent de scie avec couche dure

(30) Priorität: 20.05.2006 DE 202006008127 U; 22.07.2006 DE 102006034010
(43) Veröffentlichungstag der Anmeldung: 21.11.2007
(73) Patentinhaber: AKE Knebel GmbH & Co. KG, 72336 Balingen (DE)
(72) Erfinder: Ottenwälder, Adalbert, 72131 Ofterdingen (DE); Knebel, Alexander, 72336 Balingen (DE)
(74) Vertreter: Kohler Schmid Möbus

(56) Entgegenhaltungen:
- EP-A- 0 870 562
- EP-A- 1 378 307
- EP-A- 1 591 184
- DE-A1- 4 200 420
- JP-A- 57 201 121
- US-A1- 2003 029 297

## Beschreibung

Die Erfindung betrifft einen Sägezahn mit einem Grundkörper aus einem lötbaren Hartmetall und einer Hartschicht, aus einem Material, welches härter als das Hartmetall des Grundkörpers ist, wobei die Hartschicht an einer Frontfläche des Grundkörpers vorgesehen ist.

Ein solcher Sägezahn ist bekannt aus DE 42 00 420 A1.

Zur Holzbearbeitung eingesetzte, zumeist maschinengetriebene Werkzeuge, wie Sägeblätter, weisen oftmals Sägezähne aus Hartmetall auf. Die Sägezähne bestimmen im Wesentlichen die Schnitteigenschaften des Werkzeugs. Die Anzahl, die Gestalt und die Stellung der Sägezähne legen die Form eines mit dem Werkzeug durchgeführten Schnittes fest. Das Material der Sägezähne bestimmt die maximale Härte eines mit dem Werkzeug schneidbaren Materials.

Aus dem Stand der Technik, beispielsweise aus DE 101 23 752 A1, sind als Hohlzahn ausgebildete Sägezähne bekannt. Derartig geformte Sägezähne bewirken aufgrund einer unebenen Zahnbrust weitgehend ausbruchsfreie Schnittkanten und weitgehend glatte Schnittflächen. Durch eine oder mehrere an der Zahnbrust vorgesehene Schneidkanten entsteht ein spitzer Angriffswinkel zwischen Werkzeug und Schnittfläche, was einen mehr schneidenden als scherenden Schnitt verursacht und die Bildung eines länglichen, dünnen Spans bewirkt. Ein Nachteil derartig geformter Sägezähne ist, dass die Sägezähne, insbesondere die die Schneidoberfläche darstellenden Zahnflanken und die an ihnen ausgebildeten Schneidkanten, in kürzeren Abständen nachgeschliffen werden müssen, was zu Ausfallzeiten des Werkzeugs und weiteren Kosten bei dessen Betrieb führt.

Die EP-A-1 378 307 beschreibt Sägezähne mit abgeschrägter oder gerundeter Zahnbrust.

Weiter sind Sägezähne mit einer flachen diamantbeschichteten Zahnbrust bekannt. Bei derartig beschichteten Sägezähnen ist eine glattflächige, in der Regel mehrere Zehntel Millimeter dicke Schicht auf dem Sägezahn aus Hartmetall aufgebracht, sodass mit dem diamantbeschichteten Sägezahn sehr harte Materialien durchtrennt werden können. Da Diamant als Material der Sägezahnbeschichtung ein sehr verschleißresistenter Schneidstoff ist, kann auf Nachschleifen der Zahnflanken verzichtet werden. Die bekannten diamantbeschichteten Sägezähne weisen eine flache Zahnbrust und infolgedessen keine zur Ausbildung einer hochpräzisen Schnittkante geeignete Schneidoberfläche auf.

Der Erfindung liegt die Aufgabe zugrunde, sowohl die Schnittqualität als auch die Standzeit eines Sägezahns zu verbessern.

Die Aufgabe wird dadurch gelöst, dass die Zahnbrust mindestens einen abgeschrägten und/oder gerundeten Flächenabschnitt aufweist, dass die Frontfläche des Grundkörpers flach ist und dass die Hartschicht unterschiedliche Dicken aufweist.

Die Zahnbrust des erfindungsgemäßen Sägezahns ist mit einer Hartschicht bekleidet, deren Material härter als das zur Herstellung des Sägezahngrundkörpers verwendete Hartmetall ist. Durch den bzw. die an der Zahnbrust vorgesehenen abgeschrägten und/oder gerundeten Flächenabschnitte entstehen Vorsprünge und/oder Kanten an der Zahnbrust, mit Hilfe derer ein zu schneidendes Material leichter durchtrennt werden kann. Durch den spitzeren Eintrittswinkel entsteht eine glattere, weniger Aufreißungen aufweisende Schnittkante. Aufgrund der Hartschicht ist ein Nachschleifen der Zahnflanken des erfindungsgemäßen Sägezahns entbehrlich, sodass dieser eine hohe Lebensdauer und ein mit einem erfindungsgemäßen Sägezahn bestücktes Werkzeug eine hohe Standzeit aufweist.

Die Zahnbrust wird durch die Hartschicht ausgebildet bzw. ausgeformt. Der erfindungsgemäße Sägezahn kann derart hergestellt werden, dass der Grundkörper aus Hartmetall vor oder nach einem Zuschnitt des Sägezahns bzw. der Sägezähne mit einer Hartschicht versehen wird. Anschließend werden Aussparungen, wie Hohlformen, Nuten und/oder Rillen in die Hartschicht eingebracht und auf diese Weise die endgültige Form der Zahnbrust erreicht. Hierfür bieten sich Erodieren, insbesondere Funkenerosion, sowie andere physikalische und/oder chemische Verfahren an. Alternativ kann die Zahnbrust aus einzelnen Lagen bzw. einzelnen unterschiedlich dicken Segmenten der Hartschicht aufgebaut werden.

Der erfindungsgemäße Sägezahn liefert sowohl den Vorteil einer hohen Schnittqualität als auch den Vorteil einer hohen Standzeit. Mit Hilfe des Grundkörpers aus einem lötbaren Hartmetall kann der erfindungsgemäße Sägezahn an einem Werkzeug, beispielsweise einem Sägeblatt, durch Anlöten befestigt werden.

In einer bevorzugten Ausführung des erfindungsgemäßen Sägezahns ist die Zahnbrust hohlförmig, insbesondere konkav oder V-förmig und weist vorzugsweise eine durchgehende Hartschicht auf.

Der Vorteil einer derartigen Ausbildung ist, dass an der Zahnbrust zwei vorstehende, idealerweise spitze Schneidkanten ausgebildet werden, die durch die an der Zahnbrust vorgesehene Hartschicht verstärkt und verschleißresistenter sind. Die hart beschichtete Spitze bzw. Kante gewährleistet ein dauerhaft qualitativ hochwertiges Schneidverhalten des erfindungsgemäßen Sägezahns. Die Oberfläche der hohlförmigen Zahnbrust ist beispielsweise Teil einer Zylinderoberfläche, einer Ovalkörperoberfläche, einer Ellipsenkörperoberfläche oder aus gekrümmten und/oder ebenen Flächenteilen zusammengesetzt. Eine Ausbildung der Zahnbrust aus symmetrischen, insbesondere abgeschrägten Flächenabschnitten lässt herstellungstechnische Vereinfachungen zu.

In einer weiteren bevorzugten Ausführung des erfindungsgemäßen Sägezahns ist an einem Zahnrücken des Sägezahns und/oder an der Zahnbrust eine Fase vorgesehen.

Das Material der Hartschicht enthält vorteilhafterweise Diamant in polykristalliner Form. Durch die Wahl vom Diamant als Bestandteil der Hartschicht wird eine besonders hohe Verschleißfestigkeit des erfindungsgemäßen Sägezahns sichergestellt und die Möglichkeit zum Durchtrennen von Materialien bis zu einer Härte von Diamant geschaffen. Alternativ oder zusätzlich kann das Material der Hartschicht Chrom, Titan, Bor und/oder Karbon enthalten, wodurch eine hohe Härte und eine hohe Verschleißfestigkeit der Hartschicht erreicht werden.

Die Erfindung umfasst weiter ein maschinengetriebenes Bearbeitungswerkzeug, insbesondere Kreissägeblatt, an dem mindestens ein erfindungsgemäßer Sägezahn vorgesehen ist. Ein derartiges Bearbeitungswerkzeug, wie ein Bandsägeblatt, ein Fräser oder ein Bohrer, erhält durch den an ihm angebrachten erfindungsgemäßen Sägezahn bzw. Sägezähnen ein glatte Trennflächen und lange Späne aufweisendes Schneidverhalten und stellt somit eine hohe Schnittgüte sicher. Eine hohe Standzeit wird durch den Verzicht auf regelmäßiges Nachschleifen erreicht. Darüber hinaus können bei einer Ausführung der Hartschicht aus Diamant mit Hilfe des erfindungsgemäßen Bearbeitungswerkzeugs Materialien, die besonders hart sind, durchtrennt werden, und mit dem erfindungsgemäßen Werkzeug sind lange Bearbeitungszeiten bei gleich bleibender Schnittgüte möglich.

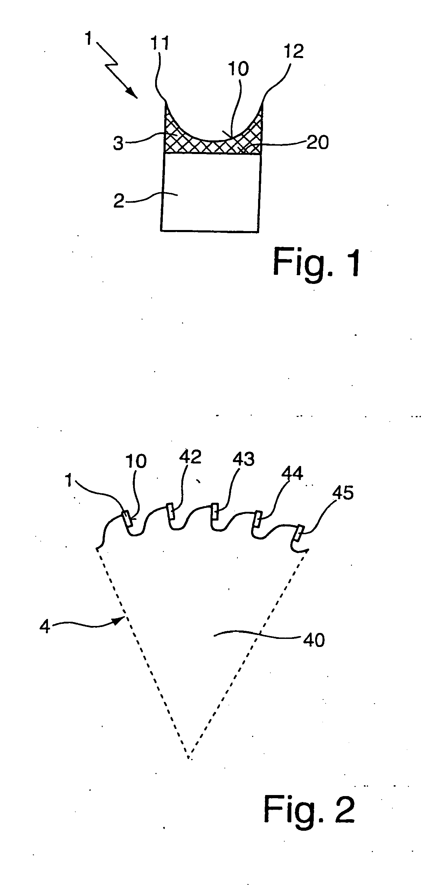

Weitere Merkmale und Vorteile der Erfindung ergeben sich aus den Figuren und der Beschreibung der Zeichnung. Der erfindungsgemäße Sägezahn und das erfindungsgemäße Bearbeitungswerkzeug sind in Ausführungsbeispielen in den Figuren 1 und 2 dargestellt. Die in den Figuren gezeigten Ausführungsformen sind stark schematisiert dargestellt und nicht maßstäblich zu verstehen.

Es zeigen:
- Fig. 1: einen Schnitt durch einen erfindungsgemäßen Sägezahn; und
- Fig. 2: einen Ausschnitt eines erfindungsgemäßen Bearbeitungs- werkzeugs.

Fig. 1 zeigt einen erfindungsgemäßen Sägezahn 1 in einem horizontalen Schnitt. Ein Grundkörper 2 des Sägezahns 1 weist einen quadratischen Querschnitt auf. An einer Frontfläche 20 des Grundkörpers 2 ist ganzflächig eine Hartschicht 3 aufgebracht. Eine vom Grundkörper 2 abgewandte Außenoberfläche der Hartschicht 3 ist ein vollständig gerundeter Flächenabschnitt, welche eine Zahnbrust 10 des Sägezahns 1 bildet. Die Zahnhöhe, d. h. die an der Zahnbrust 10 gemessene Länge, beträgt in der Regel ein bis zehn Millimeter. Durch die gezeigte konkave, hohlförmige Ausbildung der Zahnbrust 10 werden an beiden Rändern der Zahnbrust 10 eine, im Schnitt als Spitze gezeigte, Schneidkante 11 und eine, ebenso als Spitze gezeigte, weitere Schneidkante 12 ausgebildet. Die aus dem Material der Hartschicht 3 geformten Schneidkanten 11, 12 führen beim Eintreten in ein zu schneidendes Material zu einem präzisen Schnitt. Eine Ausbildung zweier Schneidkanten 11, 12 erlaubt durch eine gleichmäßige, insbesondere Kräfte gleich verteilende Anlage der Schneidkanten 11, 12 an der Schnittfläche eines zu schneidenden Materials, wie Holz, und verbessert somit zusätzlich die Schnittqualität des erfindungsgemäßen Sägezahns 1. Mit Hilfe der Schneidkanten 11, 12 kann der erfindungsgemäße Sägezahn 1 ein Material durchtrennen, welches maximal die Härte des Materials der Hartschicht, vorteilhafterweise Diamant, besitzt. Die Form der Zahnbrust 10 ist vollständig durch die Hartschicht 3 ausgebildet, welche auf der flachen Frontfläche 20 des Grundkörpers 2 aufliegt. Die Zahnbrust 10 wird beispielsweise in einem abtragenden Fertigungsverfahren aus der Hartschicht 3, welchem im vorgefertigten Zustand eine Dicke aufweisen kann, die größer oder gleich der hier gezeigten Höhe der Schneidkanten 11, 12 ist, ausgeformt.

In Fig. 2 ist eine Anbindung des Sägezahns 1 an ein Bearbeitungswerkzeug 4 dargestellt. Die Figur zeigt einen Sektor des als Kreissägeblatt ausgeführten Holzbearbeitungswerkzeugs 4. Ein Sägeblattrohling 40 weist an der Randfläche eine kammartige Zahnreihe auf, wobei an den hintereinander geordneten Kämmen der Sägezahn 1, ein zweiter Sägezahn 42, ein dritter Sägezahn 43, ein vierter Sägezahn 44 und ein fünfter Sägezahn 45 entsprechend angebracht sind. Die erfindungsgemäßen Sägezähne 1, 42, 43, 44 und 45 sind mit ihren jeweiligen Grundkörpern aus lötbarem Hartmetall an dem Sägeblattrohling 40 befestigt. Dabei weisen die Grundkörper der Sägezähne 1, 42, 43, 44 und 45 entsprechende Anbindungsmittel zur Ausbildung eines Formschlusses mit dem Sägeblattrohling 40 auf. Die Zahnbrüste der erfindungsgemäßen Sägezähne 1, 42, 43, 44 und 45 sind, wie die Zahnbrust 10 des Sägezahns 1, in tangentialer Richtung ausgerichtet. Die gemäß der Erfindung an den Sägezähnen 1, 42, 43, 44 und 45 spitz ausgebildeten Schneidkanten sorgen für eine hohe Maßgenauigkeit und Geradlinigkeit eines mit dem Bearbeitungswerkzeug 4 durchgeführten Schnittes. Ein zusätzliches Schärfen und/oder Schleifen der Sägezähne 1, 42, 43, 44 und 45 ist bei der erfindungsgemäßen Ausführung des Bearbeitungswerkzeugs nicht bzw. nur in sehr großen zeitlichen Abständen notwendig, was die Standzeit des Bearbeitungswerkzeugs 4 erhöht.

Weitere Ausführungen des erfindungsgemäßen Sägezahns 1 mit einer oder mehreren, vorteilhafterweise parallel angeordneten Schneidkanten sowie mit einer oder mehreren an der Zahnbrust 10 und/oder einem Zahnrücken des Sägezahns 1 vorgesehenen Fasen sind denkbar. Es ist darüber hinaus vorstellbar, nur einzelne Abschnitte der Frontfläche 20 mit der Hartschicht 3 zu bedecken. Die entsprechenden Abschnitte können auf die Bereiche der Schneidkanten begrenzt werden, wo das Material der Hartschicht 3 die Funktion eines sehr verschleißresistenten Schneidstoffes innehat.

Zur Verbesserung der Schnittqualität und der Standzeit weist ein erfindungsgemäßer Sägezahn 1 einen Grundkörper 2 aus einem lötbaren Hartmetall und eine Hartschicht 3 auf einem Material, welches härter als das Hartmetall des Grundkörpers 2 ist, auf. Durch an der Zahnbrust 10 vorgesehene abgeschrägte und/oder gerundete Flächenabschnitte entstehen Schneidkanten 11 und 12, die durch die an der Zahnbrust 10 vorgesehene Hartschicht 3 verstärkt und verschleißresistenter sind und ein dauerhaft qualitativ hochwertiges Schneidverhalten des erfindungsgemäßen Sägezahns 1 sicherstellen. Ein Bearbeitungswerkzeug 4 erhält durch einen an ihm angebrachten erfindungsgemäßen Sägezahn bzw. Sägezähnen 1, 42, 43, 44 und 45 ein glatte Trennflächen aufweisendes Schneidverhalten und stellt somit eine hohe Schnittgüte sicher.

## Patentansprüche

1. Sägezahn (1) mit einem Grundkörper (2) aus einem lötbaren Hartmetall und einer Hartschicht (3), aus einem Material, welches härter als das Hartmetall des Grundkörpers (2) ist, wobei die Hartschicht (3) an einer Frontfläche (20) des Grundkörpers (2) vorgesehen ist, **dadurch gekennzeichnet, dass** die Zahnbrust (10) mindestens einen abgeschrägten und/oder gerundeten Flächenabschnitt aufweist und dass die Frontfläche (20) des Grundkörpers (2) flach ist und die Hartschicht (3) unterschiedliche Dicken aufweist.

2. Sägezahn (1) nach Anspruch 1, **dadurch gekennzeichnet, dass** die Zahnbrust (10) hohlförmig, insbesondere konkav oder V-förmig, ist.

3. Sägezahn (1) nach einem der Ansprüche 1 bis 2, **dadurch gekennzeichnet, dass** an einem Zahnrücken des Sägezahns (1) und/oder an der Zahnbrust (10) eine Fase vorgesehen ist.

4. Sägezahn (1) nach einem der Ansprüche 1 bis 3, **dadurch gekennzeichnet, dass** das Material der Hartschicht (3) Diamant, insbesondere in polykristalliner Form enthält.

5. Maschinengetriebenes Bearbeitungswerkzeug (4), insbesondere Kreissägeblatt, **dadurch gekennzeichnet, dass** an dem Bearbeitungswerkzeug (4), wie einem Bandsägeblatt, Fräser, Bohrer, mindestens ein Sägezahn (1, 42, 43, 44, 45) nach einem der Ansprüche 1 bis 4 vorgesehen ist.

## Claims

1. Sawtooth (1) having a main body (2) of a solderable or brazable cemented carbide and a hard layer (3) of a material which is harder than the cemented carbide of the main body (2), the hard layer (3) being provided on a front surface (20) of the main body (2), **characterised in that** the face (10) of the tooth has at least one portion of its area which is inclined and/or rounded and **in that** the front surface (20) of the main body (2) is flat and the hard layer (3) is of different thicknesses.

2. Sawtooth (1) according to claim 1, **characterised in that** the face (10) of the tooth is hollow and in particular is concave or V-shaped.

3. Sawtooth (1) according to either of claims 1 and 2, **characterised in that** a bevel is provided on a back of the sawtooth (1) and/or on the face (10) of the tooth.

4. Sawtooth (1) according to one of claims 1 to 3, **characterised in that** the material of the hard layer (3) contains diamond, in particular in polycrystalline form.

5. Power-driven machining tool (4) and in particular a blade for a circular saw, **characterised in that** at least one sawtooth (1, 42, 43, 44, 45) according to one of claims 1 to 4 is provided on the machining tool (4), which machining tool (4) is such as a bandsaw blade, milling cutter or drill bit.

## Revendications

1. Dent de scie (1) avec un corps de base (2) constitué d'un métal dur brasable et d'une couche dure (3) à base d'un matériau qui est plus dur que le métal dur du corps de base (2), dans laquelle la couche dure (3) est appliquée sur une surface frontale (20) du corps de base (2), **caractérisée en ce que** la face d'attaque (10) de la dent présente au moins une section de surface biseautée et/ou arrondie et **en ce que** la surface frontale (20) du corps de base (2) est plate et la couche dure (3) présente des épaisseurs différentes.

2. Dent de scie (1) selon la revendication 1, **caractérisée en ce que** la face d'attaque (10) de la dent se présente sous une forme creuse, en particulier concave ou en V.

3. Dent de scie (1) selon l'une quelconque des revendications 1 et 2, **caractérisée en ce qu'**il est prévu un biseau sur une face de fuite de la dent de scie (1) et/ou sur la face d'attaque (10).

4. Dent de scie (1) selon l'une quelconque des revendications 1 à 3, **caractérisée en ce que** le matériau de la couche dure (3) contient du diamant, en particulier sous une forme polycristalline.

5. Outil d'usinage (4) entraîné par une machine, en particulier lame de scie circulaire, **caractérisé**(e) en ce qu'il est prévu sur l'outil d'usinage (4), tel qu'une lame de scie à ruban, des fraises, des forets, au moins une dent de scie (1, 42, 43, 44, 45) selon l'une quelconque des revendications 1 à 4.
